# EUROPEAN PATENT APPLICATION

(11) **EP 2 642 747 A1**
(43) Date of publication of application: **25.09.2013**
(21) Application number: 12160547.1
(22) Date of filing: 21.03.2012
(51) Int. Cl.: H04N 5/232, H04N 7/18, G08B 13/196

(54) **A movable monitoring device, a method therein and a monitoring system comprising the movable monitoring device.**

(71) Applicant: Axis AB, 223 69 Lund (SE)
(72) Inventor: Lund, Mats, 224 72 LUND (SE)
(74) Representative: Valea AB

(57) **Abstract**

A movable monitoring device, a method therein and a monitoring system comprising the movable monitoring device, for configuring at least one preset image capturing position of the movable monitoring device. The method comprises arranging the monitoring device in a plurality of image capturing positions, wherein each image capturing position is defined by at least one setting of the monitoring device. For each image capturing position, the method comprises capturing an image of at least a part of a scene. Further, the method comprises recognizing at least one marker comprised in a captured image and arranged at a location in the scene. For the captured image comprising the at least one marker, the method comprises storing the image capturing position as the preset image capturing position for the location.

## Description

### TECHNICAL FIELD

Embodiments herein relate to a movable monitoring device, a method therein and to a monitoring system comprising the movable monitoring device. Especially, embodiments herein relate to configuration of at least one preset image capturing position of the movable monitoring device.

### BACKGROUND

Today, movable monitoring devices, such as movable camera capturing devices and movable video recording devices, are available at different locations for monitoring and/or surveillance purposes. For example, movable monitoring devices are arranged in product storages or sales areas for monitoring products stored in the storage or sales area. The products may be arranged at different locations in the product storage or sales area, and one and the same movable monitoring device may be configured to monitor several different located products by changing the settings of the movable monitoring device from time to time.

When arranging the movable monitoring device in a new location, the movable monitoring device has to be set up. Typically, the movable monitoring device is manually set up by adjusting the settings of the movable monitoring device in a plurality of degrees of freedom, e.g. focus, aperture, exposure time, and the x, y, and z-position of the movable monitoring device and then defining a preset for the achieved position. By defining presets for a plurality of positions, a plurality of images of a scene can be captured and/or videos of the scene can be recorded at defined time points or time intervals by arranging the movable monitoring device in accordance with the presets.

However, to manually define presets of the movable monitoring device by manually changing the settings of the movable monitoring is cumbersome and time consuming.

The patent document US 7,957,554 B1 to Silver et al. discloses an apparatus and a method for setting up a non-movable vision system having a camera and a vision processor cooperative with the camera. The apparatus includes a gesture recognizer, a key recognizer, a breakout box having at least two signaling elements, and a setup control unit that is cooperative with the gesture recognizer, the key recognizer and the breakout box.

A drawback with the vision system disclosed in US 7,957,554 B1 is that it requires manual user interactions. For example, a user has to manually enter each set-up mode to adjust each degree of freedom. When a perfect adjustment is achieved, indicated by a Light Emitting Diode (LED) continuously being in an ON-state, the user has to help the vision system to know that a perfect adjustment has been achieved. This is accomplished by manually placing a "key" in the field of view of the vision system.

### SUMMARY

It is therefore an object of embodiments herein to provide a movable monitoring device having an improved performance providing presets in an effortless and automatic manner.

According to a first aspect of embodiments herein, the object is achieved by a method in a movable monitoring device for configuring at least one preset image capturing position of the movable monitoring device.

The movable monitoring device is arranged in a plurality of image capturing positions, wherein each image capturing position is defined by at least one setting of the movable monitoring device. For each image capturing position, the movable monitoring device captures an image of at least a part of a scene. Further, the movable monitoring device recognizes at least one marker comprised in a captured image and arranged at a location in the scene. For the captured image comprising the at least one marker, the movable monitoring device stores the image capturing position as the preset image capturing position for the location.

According to a second aspect of embodiments herein, the object is achieved by a movable monitoring device for configuring at least one preset image capturing position of the movable monitoring device.

The movable monitoring device comprises an arranging unit configured to arrange the movable monitoring device in a plurality of image capturing positions. Each image capturing position is defined by at least one setting of the movable monitoring device.

Further, the movable monitoring device comprises an image capturing unit configured to capture an image of at least a part of a scene for each image capturing position.

A recognizing unit is comprised in the movable monitoring device and is configured to recognize at least one marker comprised in a captured image and arranged at a location in the scene.

The movable monitoring device comprises further a storing unit configured to store, for the captured image comprising the at least one marker, the image capturing position as the preset image capturing position for the location.

According to a third aspect of embodiments herein, the object is achieved by a monitoring system comprising the movable monitoring device.

According to a fourth aspect of embodiments herein, the object is achieved by a computer program product for carrying out one or more actions or realizing one or more features according to embodiments herein when executed in a processing unit.

Since the movable monitoring device is configured to be arranged in a plurality of image capturing positions; since for each image capturing position, the movable monitoring device captures an image of at least a part of a scene; and since the movable monitoring device recognizes at least one marker comprised in a captured image, the image capturing position for the marker may be stored as a preset of the movable monitoring device. Thereby, presets for the movable monitoring device are automatically obtained. This results in an improved performance of the movable monitoring device by improving the usability and the ease of use of the movable monitoring device.

An advantage with embodiments herein is that presets of the movable monitoring device are provided in an effortless and automatic manner. For example, the presets may therefore be more often updated without the need of taking any labor effort into account.

A further advantage with embodiments herein is that many more presets may be assigned as compared to prior art systems and apparatuses. Thereby, many more presets may be available for a user for monitoring purposes.

### BRIEF DESCRIPTION OF THE DRAWINGS

Examples of embodiments herein will be described in more detail with reference to attached drawings in which:
Figure 1 is a schematic block diagram illustrating embodiments of a monitoring system;
Figure 2a is a flowchart depicting embodiments of a method in a movable monitoring device;
Figure 2b is a flowchart depicting embodiments of a method in a movable monitoring device; and
Figure 3 is a schematic block diagram illustrating embodiments of a movable monitoring device.

### DETAILED DESCRIPTION

Embodiments herein will be exemplified in the following non-limiting description.

When used herein, by the term "preset" is meant a setting of the movable monitoring device that identifies an image capturing position of the movable monitoring device. The term "preset" may also be expressed as a setting of the movable monitoring device that is assigned a specific image capturing position.

The wording "an image capturing position", when used herein, should be understood to refer to a setting of the movable monitoring device for which setting an image is captured or is to be captured, or a video is recorded or is to be recorded.

As previously mentioned, to manually set presets for a plurality of image capturing positions of a movable monitoring device is cumbersome and labour-intensive.

By embodiments herein, it is therefore provided to put out, for the movable monitoring device, at least one easily recognizable marker at those locations in a scene where the presets are desired. The movable monitoring device may then be set to scan, i.e. to sequentially search, at least a part of the scene. When the movable monitoring device, by means of image recognition, finds the at least one marker comprised in a captured image of at least a part of the scene, a preset of the movable monitoring device is set to correspond to the setting of the movable monitoring device in the image capturing position. In some embodiments, the preset will be given a label. The scan may be continued in order to search for a next marker in the scene.

According to an example, the movable monitoring device is placed in a large supermarket monitoring a number of items typically displayed on shelves. Markers comprising barcodes identifying the items are put out close to the items. The movable monitoring device may be configured to scan its full scene, to find the markers, i.e. the barcodes, and to set a preset for each found barcode. The found barcode may further be looked up in a database, e.g. a barcode database, and the product name associated with the barcode may be used as a label for the preset.

According to another example, markers such as signs, temporary or permanent, are put up next to doors in a corridor or a hall. The movable monitoring device is configured to scan the scene searching for the signs. For each recognized sign a preset is assigned. One or more characters and/or numbers on the sign may be used as the label for the preset.

It should be understood that the examples given above are not intended to limit embodiments herein, but are only intended to exemplify some embodiments.

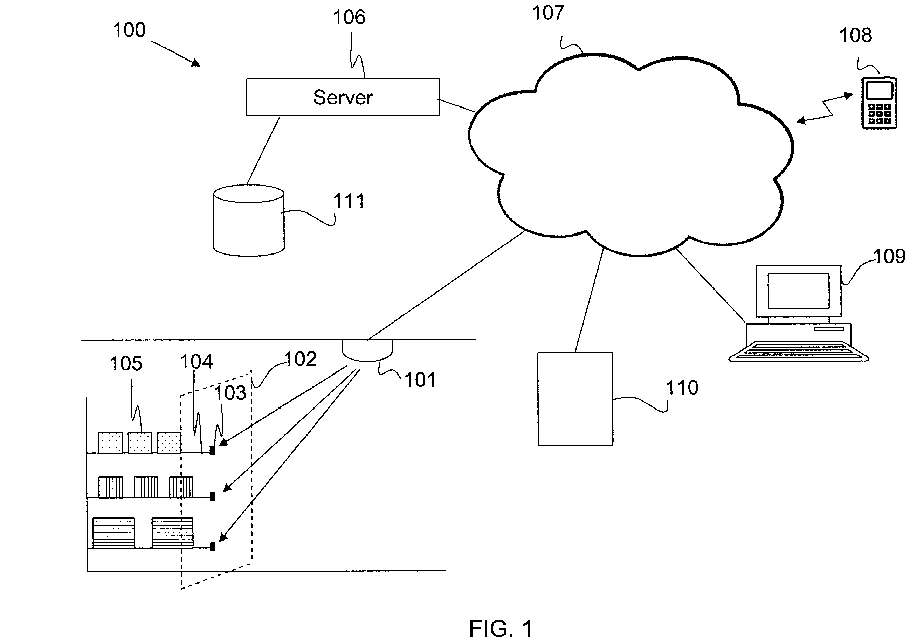

**Fig. 1** is a schematic overview of embodiments of **a monitoring system 100.** The monitoring system 100 comprises **at least one movable monitoring device 101.**

The movable monitoring device 101 may be a Pan Tilt Zoom (PTZ) camera. The terms pan and tilt imply that the camera is configured to be turned horizontally and vertically, respectively. In this description, it is assumed that the movable monitoring device 101 is mounted in the ceiling of a building, and that a pan movement is a horizontal movement and a tilt movement is a vertical movement. However, it should be understood that the movable monitoring device 101 may be mounted in the wall of the building and that a pan movement of the movable monitoring device 101 mounted in the ceiling correspond to a tilt movement of the movable monitoring device 101 when mounted in the wall, and vice versa.

In some embodiments, the movable monitoring device 101 is a rotating camera configured to perform a rotating movement, e.g. a continuous rotating movement, in a horizontal and/or a vertical direction. The rotating camera may be a rotating dome camera.

The movable monitoring device 101 is configured to be arranged in one or more image capturing positions and to capture one or more images in the one or more image capturing positions.

In this description the wording "capture an image" should be understood to comprise capturing of a still image and/or capturing of a moving image. A moving image may be achieved by moving the movable monitoring device 101. Thus, the movable monitoring device 101 may be configured to capture a video, also sometimes referred to as the movable monitoring device 101 is configured to record a video.

Further, when in the one or more image capturing positions, the movable monitoring device 101 is configured to capture an image of at least a part of **a scene 102,** as schematically illustrated by the dotted box 102. The scene 102 may be a section in a sales area or in a storage area.

As illustrated in Fig. 1, **a marker 103** is arranged at **a location 104** in the scene 102. It should be understood that, in some embodiments, the location 104 may comprise an area that is larger than the area of the marker 103. Further, in some embodiments, the location 104 comprises the marker 103. However, it should be understood, that the location 104 does not need to comprise the marker 103. It may be sufficient that the marker 103 is arranged at the location 104 and represents the location 104.

The marker 103 may comprise a barcode, a Quick Response (QR) code, a coloration, an empty shelf, a sign, a logotype, or a group comprising one or more barcode, coloration, empty shelf, sign, and/or logotype, etc.

The location 104 may be a location for **an item 105** to be monitored. For example, the location 104 may be a shelf in a sales area or in a storage area. However, the location may be at a door or at a car. This may for example be the case when the marker 103 is a sign, e.g. a doorplate or a license plate, arranged at the door or at the car, respectively.

The item 105 may be a product on sale in the sales area or an item stored in the storage area. When for example the marker 103 is a sign, e.g. a doorplate, the item 105 may be a door, a room, a house or a part thereof to be monitored. Further, the item 105 may be a car in .e.g. a parking lot.

The monitoring system 100 comprises further **a server 106** to which the movable monitoring device 101 may be connected via **a communications network 107.**

The server 106 is a computerized device, e.g. a computer, configured to control the movable monitoring device 101. For example, the server 106 may control the movable monitoring device 101 to scan, i.e. to sequentially search, at least a part of the scene 102, for one or more markers 103 arranged at one or more locations 104 in a scene 102, to create one or more preset image capturing positions for the one or more markers 103 and/or to monitor one or more items 105 arranged at the one or more locations 104. In some embodiments, the server 106 is configured to provide information and data to the movable monitoring device 101 and to receive information and data from the movable monitoring device 101. Further, the server 106 may be configured to control the interaction between the movable monitoring device 101 and one or more user equipments. In some embodiment, when for example an empty shelf is detected at a marker 103 (which will be described below), the server 106 may be configured to alert a provider of the item 105 to be located at the empty shelf that the shelf needs to be refilled.

Further, in some embodiments, the movable monitoring device 101 comprises the server 106 or at least a part of the server's 106 features and functionalities.

The communications network 107 may comprise a radio communications network, the Internet, a Local Area Network (LAN), and/or a Wide Area Network (WAN), etc.

A user may connect to the movable monitoring device 101 over the communications network 107 by means of a user equipment such as **a portable communications device 108** and/or **a stationary communications device 109.**

The portable communications device 108 may be a mobile telephone, a mobile computerized device such as a laptop, a Personal Digital Assistant (PDA), a tablet computer or a portable installation device just to mention some examples.

The stationary communications device 109 may be a Personal Computer (PC), an intelligent TV or a monitor with a built-in computerized device, etc.

For example, by means of the user equipment 108,109, a provider of an item 105 may connect to the movable monitoring device 101 and control the positioning of the movable monitoring device 101 in one or more preset image capturing positions in order to monitor the item 105 and possible also to detect an event, such as an empty shelf. Alternatively, the movable monitoring device 101 may be configured to be automatically positioned in one or more preset image capturing positions and to automatically record information, e.g. images and/or videos, to **a storage device 110.** The storage device 110 may be connected to the movable monitoring device 101 by means of the communications network 107 or be comprised in the movable monitoring device 101. A user may, by means of a user equipment, retrieve the needed data from the storage device 110.

Further, as illustrated in Fig. 1, the monitoring system 100 may comprise **a database 111** connected to the server 106. However, it should be understood that the database 111 may be comprised in the storage device 110 connected to the communications network 107 or it may be comprised in the movable monitoring device 101. The database 111 is configured to store information and/or data relating to the movable monitoring device 101, to the one or more markers 103 and/or to users of the one or more user equipments 108,109. For example, the database 111 may store settings of the movable monitoring device 101 corresponding to one or more image capturing positions, preset settings corresponding to one or more preset image capturing positions, information of the one or more markers 103, information about a provider of an item, etc. However, as will be described below, settings of the movable monitoring device 101 corresponding to one or more image capturing positions, preset settings corresponding to one or more preset image capturing positions, information of the one or more markers 103, and/or information about a provider of an item 105, etc. may, in addition or alternatively, be stored in a memory of the movable monitoring device 101.

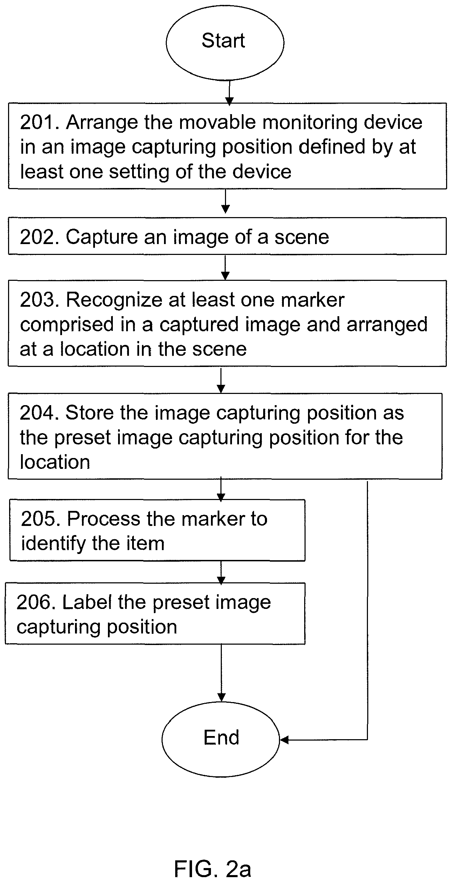

**Figure 2a** is a **flowchart depicting embodiments of a method** in the movable monitoring device 101 for configuring at least one preset image capturing position of the movable monitoring device 101.

Actions for configuring the at least one preset image capturing position of the movable monitoring device 101 will now be described in more detail. The actions do not have to be performed in the order stated below, but may be taken in any suitable order. Further, actions may be combined.

### Action 201

The movable monitoring device 101 is arranged in a plurality of image capturing positions. Each image capturing position is defined by at least one setting of the movable monitoring device 101.

The at least one setting of the movable monitoring device 101 may be a pan setting, a tilt setting, a zoom setting, a focus setting, an aperture setting and/or an exposure time setting.

The plurality of image capturing positions may be a plurality of consecutive image capturing positions.

In some embodiments, the plurality of consecutive image capturing positions starts at a start image capturing position corresponding to a start setting of the at least one setting of the movable monitoring device 101 and ends at an end image capturing position corresponding to an end setting of the at least one setting of the movable monitoring device 101. Two consecutive image capturing positions may be separated by different values in the at least one setting of the movable monitoring device 101.

The different values in the at least one setting may correspond to one or more steps in the pan setting, the tilt setting, the zoom setting, a focus setting, an aperture setting and/or an exposure time setting. The different values in the at least one setting may be a function of or correspond to the difference between a start setting and an end setting in the pan setting, the tilt setting, the zoom setting, the focus setting, the aperture setting and/or the exposure time setting. The latter may be the case when the movement between the start setting and the end setting is a continuous movement, e.g. when the movement is a continuous movement between a start pan and/or tilt setting and an end pan and/or tilt setting.

For example, when the at least one setting of the movable monitoring device 101 comprises a pan setting, the start setting of the pan setting may be the minimum setting the pan setting may take and the end setting may be the maximum setting the pan setting may take. Further, in case of a plurality consecutive image capturing positions, the value separating two consecutive pan settings may be a predefined number of steps or degrees, e.g. one or more steps, or one or more degrees.

The plurality of image capturing positions may comprise a set of predefined image capturing positions, which set of predefined image capturing positions may correspond to a predefined region of the scene 102. Thus, the set of predefined image capturing positions may for example correspond to one or more shelves in the scene 102, which shelves are to be monitored. For example, the one or more shelves may be shelves storing one or more different items 105 from one and the same provider.

In some embodiments, the plurality of image capturing positions comprise a lower limitation in the at least one setting of the movable monitoring device 101 and/or an upper limitation in the at least one setting of the movable monitoring device 101. Thereby the setting of the movable monitoring device 101 may be limited by the lower limitation and/or the upper limitation. For example, this may be of value in order to limit the monitoring not to comprise parts of the floor and/or the ceiling in e.g. the sales area.

By changing the pan and tilt settings of the movable monitoring device 101, the scene 102 may be scanned in a desired manner. For example, the scene may be scanned in a continuous manner from an upper, leftmost, position to a lower, rightmost, position. However, it should be understood that the scene 102 may be scanned in any desired manner, by changing e.g. the pan and/or tilt setting as desired.

According to one example, the zoom setting of the movable monitoring device 101 may be set to a maximally zoomed out value to scan an overview of the scene 102, or of a part of the scene 102 depending of the size of the scene 102, in order to find as many markers 103 as possible. The scanning may be accomplished by scanning from a minimal vertical and horizontal position to a maximal vertical and horizontal position by scanning horizontally for each vertical setting before increasing the vertical setting and performing a new horizontal scanning.

However, it should be understood that the zoom setting of the movable monitoring device 101 may be set to a maximally zoomed in value in order to scan a part of the scene 102, or the full scene 102 depending of the size of the scene 102, for one or more markers 103. The scanning may be accomplished by scanning from a minimal vertical and horizontal position to a maximal vertical and horizontal position by scanning horizontally for each vertical setting before increasing the vertical setting and performing a new horizontal scanning.

Further, it should be understood that the movable monitoring device 101 may be arranged in a second image capturing position for the same pan and/or tilt setting. The second image capturing position comprises a change in the zoom setting, the focus setting, then aperture setting and/or an exposure time setting. This may be the case when for example the image quality of a first captured image is poor. Thus, by changing at least one of the zoom setting, the focus setting, then aperture setting and/or an exposure time setting, e.g. the zoom setting, a second image of better image quality may be captured, as will be described with reference to action 202 below.

### Action 202

For each image capturing position, the movable monitoring device 101 captures an image of at least a part of a scene 102.

As mentioned in action 201, the movable monitoring device 101 may be arranged in a second image capturing position for the same pan and/or tilt setting. The second image capturing position comprises a change in the zoom setting, the focus setting, the aperture setting and/or the exposure time setting. Then, the movable monitoring device 101 may capture a second image of the at least one marker 103 at the location 104 in at least a part of the scene 102. The second image may be of a better quality as compared to the previously captured image of the at least one marker 103 at the location 104.

### Action 203

The movable monitoring device 101 recognizes at least one marker 103 comprised in a captured image and arranged at a location 104 in the scene 102. The movable monitoring device 101 may recognize the at least one marker 103 by performing image recognition, such as Optical Character Recognition (OCR) or barcode recognition, such as Universal Product Code (UPC) recognition or European Article Number (renamed International Article Number) (EAN) recognition.

As previously mentioned, the at least one marker 103 may comprise a barcode, a coloration, an empty shelf, a sign, a logotype, or a group comprising one or more barcode, coloration, empty shelf, sign, and/or logotype.

The movable monitoring device 101 may further be configured to recognize the place of the at least one marker 103 within the captured image. That is, the movable monitoring device 101 may be configured to recognize if the at least one marker 103 is arranged at or close to the edges of the captured image, or if the at least one marker 103 is arranged in the center of the captured image or somewhere between the edges and the center of the captured image.

When the movable monitoring device 101 has taken a second image of a better quality than a previously captured first image for the same pan and/or tilt setting as described in action 202 above, the movable monitoring device 101 recognizes the at least one marker 103 comprised in the captured second image and arranged at the location 104 in the at least a part of the scene 102.

### Action 204

For the captured image comprising the at least one marker 103, the movable monitoring device 101 stores the image capturing position as the preset image capturing position for the location 104. The location 104 may comprise the at least one marker 103.

However, as previously mentioned, the location 104 does not need to comprise the marker 103. It may be sufficient that the marker 103 is arranged at the location 104 and represents the location 104.

In some embodiments, the location 104 corresponds to the at least one marker 103.

Further, the image capturing position may be stored as the preset image capturing position for the at least one marker 103.

In some embodiments, the movable monitoring device 101 is configured to automatically store a different zoom position than the zoom position in the image capturing position. The different zoom position may correspond to a zoomed out position, which zoomed out position is a position that is zoomed out a predefined number of steps as compared to the zoom position in the image capturing position. By storing the zoomed out position in the preset image capturing position it is ascertained that the location 104 corresponding to the marker 103, possibly also together with its associated item, will be comprised in a captured image for the preset image capturing position.

The movable monitoring device 101 may be configured to store a plurality of preset image capturing positions. For example, the movable monitoring device 101 may be configured to store one preset image capturing position for each captured image comprising the marker 103. Thus, a plurality of preset image capturing positions may be stored for one marker 103.

In some embodiments, the movable monitoring device 101 is configured to store only one preset image capturing position for each marker 103. For example, the preset image capturing position may only be stored for the marker 103 when the marker 103 is located within a central part of the captured image or in a position where the marker 103 is closest to a central point of the captured image. By a central part is meant in the center or almost in the center of the captured image.

The movable monitoring device 101 may further store the plurality of preset image capturing positions together with one or more points in time or time intervals. The point in time or time interval indicates when the movable monitoring device 101 is to be arranged in one of the preset image capturing positions to capture an image as will be described in relation to actions 207-211 below.

As previously mentioned, the movable monitoring device 101 may capture a second image, which second image may be of better quality than a previously captured first image. In some embodiments, when the movable monitoring device 101 has recognized the at least one marker 103 comprised in the captured second image for the same pan and/or tilt setting as described in relation to action 203 above, the movable monitoring device 101 stores the second image capturing position as the preset image capturing position for the at least one marker 103, whereby the second image capturing position replaces a possible previously stored first image capturing position as the preset image capturing position.

### Action 205

In some embodiments, the at least one marker 103 is arranged to identify an item 105 arranged at the location 104. In order to identify the item 105, the movable monitoring device processes the marker 103. The movable monitoring device 101 may process the marker 103 by performing character recognition and/or image recognition and/or Video Content Analytics (VCA).

In some embodiments, the movable monitoring device 101 process the marker 103 to recognize for example a number, a name or one or more characters to be used to identify the item 105.

Further, in case the at least one marker 103 is a barcode and the barcode is a UPC barcode or an EAN barcode, the movable monitoring device 101 may look up, by means of the barcode, the identity of the item 105 in e.g. a lookup table. The lookup table may be comprised in a database, e.g. in the database 111, or it may be provided by a third party and available to the movable monitoring device 101 over the communications network 107.

However, it should be understood that in some embodiments, wherein the marker 103 is for example a sign, such as a sticky note (e.g. Post-it™) with a number or one or more characters on it, the number or the one or more characters may be used to look up the identity of the item 105 in the lookup table.

Further, it should be understood that the lookup table is given only as an example that the identities do not need to be stored in a table, but may be stored in any suitable way in order to be looked up by means of e.g. barcodes, numbers or characters.

### Action 206

When the movable monitoring device 101 has identified the item 105, the movable monitoring device 101 labels the preset image capturing position with the identity of the item 105, or with a label corresponding to the identity of the item 105. The label may be stored together with the preset image capturing position in a storage, e.g. in the database 111 or in a memory 110 comprised in or connected to the movable monitoring device 101, which will be described below.

By storing the label identifying the item 105 together with the one or more preset image capturing positions, the one or more preset image capturing positions may be retrieved after searching the storage for the label, e.g. searching the storage for the identity of the item 105.

For example, in some embodiments described herein, a provider of items to e.g. a large supermarket may be given access to the monitoring system 100. The provider may then, by means of e.g. a user equipment 108,109, be able to lookup in the database storing the preset image capturing positions, a label of a specific item that he is responsible for and instruct the movable monitoring device 101 to go to the preset image capturing position for the location of the specific item. Thus by means of the monitoring system 100 the provider may be able to see the live status of the display of items.

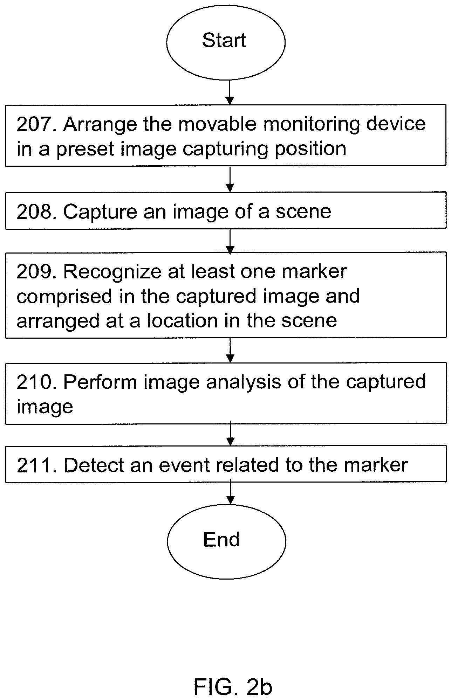

**Figure 2b** is a **flowchart depicting embodiments of a method** in the movable monitoring device 101 for performing a tour by positioning the movable monitoring device 101 in one or more of the preset image capturing positions and to detect an event related to a marker 103.

Actions for performing a tour by positioning the movable monitoring device 101 in one or more of the preset image capturing positions and to detect an event will now be described in more detail. The actions do not have to be performed in the order stated below, but may be taken in any suitable order. Further, actions may be combined.

### Action 207

When one or more preset image capturing positions have been determined as described above, the movable monitoring device 101 may be arranged in a plurality of the preset image capturing positions in order to perform a tour of at least a part of the scene 102. This means that the movable monitoring device 101 at certain points in time or at certain time intervals after the set up may be arranged in one of the preset image capturing positions to capture an image as will be described in action 208 below.

According to one example, the movable monitoring device 101 may be configured to perform a daily or weekly tour of at least a part of the scene 102. Such a tour may be performed after business hours of e.g. the sales area. Further, a location map may be created based on the result of the performed tour. The location map is configured to show where in the scene 102 the items 105 are located. Furthermore, as will be described in relation to e.g. action 211, an event such as an empty shelf may be detected based on the performed tour.

As previously described, a provider of an item 105 may connect to the movable monitoring device 101 in order to live monitor and/or record images of the item 105, which the provider will find as a preset labeled according to the identity of the item, and possible also to detect an event, such as an empty shelf.

### Action 208

When the movable monitoring device 101 has been arranged in one or more of the plurality of preset image capturing positions, the movable monitoring device 101 captures at least one image of at least a part of the scene 102.

### Action 209

When the movable monitoring device 101 has captured at least one image of at least a part of the scene 102, the movable monitoring device 101 recognizes the marker 103 for the preset image capturing position in the at least one image.

### Action 210

After the recognition of the marker 103 in the captured at least one image, the movable monitoring device 101 performs image analysis of the captured at least one image in order to be able to detect a possible event in the at least one image, as will be described in action 211. For, example the movable monitoring device 101 may perform image analysis by identifying an area of uniform color in the captured image as an empty shelf, an open door or a closed door.

In some embodiments, the movable monitoring device 101 sends the captured image to the server 106 and/or to the user equipment 108,109 for image analysis. The movable monitoring device 101 may send the captured image via e-mail, File Transport Protocol (FTP), and/or other message types such as Short Message Service (SMS), Rich Site Summary (RSS), Resource Description Framework (RDF) Site Summary (RSS), or Really Simple Syndication (RSS), etc.

### Action 211

After performing the image analysis of the captured at least one image as described in action 210, the movable monitoring device 101 detects an event in the at least one image, which event is associated with the marker 103.

The event may be an empty shelf indicating that the items 105 associated with the marker 103 need to be refilled.

Further, the event may be that a car is present or absent at a parking lot.

Furthermore, the event may be that a door is open or closed.

As another example, the event may be that there is an obstruction at a location, e.g. under a marker identifying an emergency exit. For example, the obstruction may be a car parked in front of the emergency exit, or a trash bin placed in front of the emergency exit, causing an emergency door to be hard to open or preventing a lot of people to exit fast.

Further, the event may be that a captured image should be sent via an electronic media, such as e-mail, FTP, RSS, fax, etc., to be viewed by a user or by a more advanced external image system.

The movable monitoring device 101 may generate an action, such as an e-mail or an alarm, based on the detected event, and send the action to the server 106 and/or a user equipment 108,109 over the network 107.

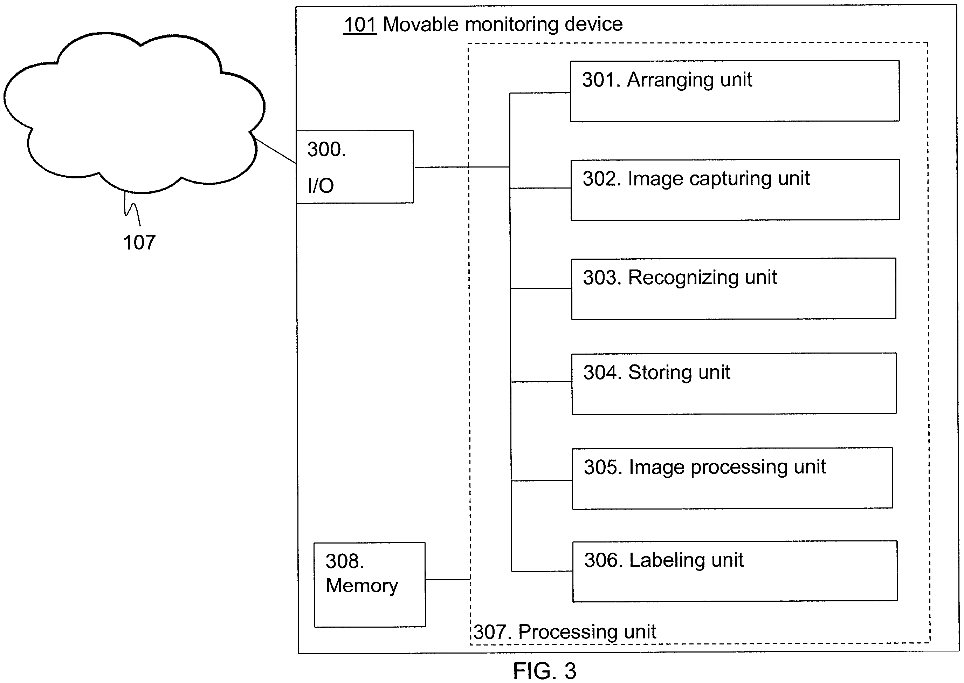

To perform the method actions in the movable monitoring device 101 for configuring at least one preset image capturing position of the movable monitoring device 101 and for performing a tour of at least a part of the scene 102 by positioning the movable monitoring device 101 in one or more of the preset image capturing positions and to detect an event related to a marker as described above, some embodiments of the movable monitoring device 101 comprises the arrangement depicted in **Figure 3**. As mentioned above, the movable monitoring device 101 is comprised in the monitoring system 100.

The movable monitoring device 101 comprises **an input and output port 300** configured to function as an interface for communication over the communications network 107 between the movable monitoring device 101 and the server 106, between the movable monitoring device 101 and one or more user equipments 108,109, and between the movable monitoring device 101 and the storage device 110.

In some embodiments, the input and output port 300 may be configured as a communication interface for communication between the movable monitoring device 101 and one or more other monitoring devices (not shown in fig. 1), e.g. one or more non-movable monitoring device and/or one or more movable monitoring devices 101 comprised in the monitoring system 100. A non-movable monitoring device may be a fixed camera, e.g. a fixed video camera.

Further, the movable monitoring device 101 comprises **an arranging unit 301** configured to arrange the movable monitoring device 101 in a plurality of image capturing positions, wherein each image capturing position is defined by at least one setting of the movable monitoring device 101.

As previously mentioned, the at least one setting of the movable monitoring device 101 is a pan setting, a tilt setting, a zoom setting, a focus setting, an aperture setting and/or an exposure time setting.

The plurality of image capturing positions may be a plurality of consecutive image capturing positions. The plurality of consecutive image capturing positions may start at a start image capturing position corresponding to a start setting of the at least one setting of the movable monitoring device 101 and end at an end image capturing position corresponding to an end setting of the at least one setting of the movable monitoring device 101. Further, two consecutive image capturing positions may be separated by different values in the at least one setting of the movable monitoring device 101.

As previously mentioned, the different values in the at least one setting may correspond to one or more steps in the pan setting, the tilt setting, the zoom setting, a focus setting, an aperture setting and/or an exposure time setting. The different values in the at least one setting may correspond to difference between a start setting and an end setting in the pan setting, the tilt setting, the zoom setting, the focus setting, the aperture setting and/or exposure time setting. The latter may be the case when the movement between the start setting and the end setting is a continuous movement, e.g. when the movement is a continuous movement between a start pan and/or tilt setting and an end pan and/or tilt setting.

In some embodiments, the plurality of image capturing positions comprise a set of predefined image capturing positions, which set of predefined image capturing positions corresponds to a predefined region of the scene 102.

The plurality of image capturing positions may comprise a lower limitation in at least one setting of the movable monitoring device 101 and/or an upper limitation at least one setting of the movable monitoring device 101. Thereby the setting of the movable monitoring device 101 may be limited by the lower limitation and/or the upper limitation.

By the arranging unit 301 changing the pan and tilt settings of the movable monitoring device 101, the scene 102 may be scanned in a desired manner. As previously described, thereby the scene may be scanned in a continuous manner from an upper, leftmost, position to a lower, rightmost, position. However, it should be understood that the scene 102 may be scanned in any desired manner, by the arranging unit 301 changing the pan and/or tilt setting as desired.

The arranging unit 301 may further be configured to arrange the movable monitoring device 101 in a second image capturing position for the same pan and/or tilt setting. The second image capturing position comprises at least one change in the zoom setting, the focus setting, the aperture setting and/or exposure time setting of the movable monitoring device 101 as compared to a first image capturing position for the same pan and/or tilt setting. As mentioned under action 201, this may be the case when for example the image quality of a first captured image is poor. Thus, by changing at least one of the zoom setting, the focus setting, the aperture setting and/or exposure time setting, e.g. the zoom setting, a second image of better image quality may be captured, as described under action 202 above.

In some embodiments, when one or more preset image capturing positions have been determined as described above, the arranging unit 301 is further configured to arrange the monitoring device 101 in a plurality of the preset image capturing positions. This means that the arranging unit 301 at certain points in time or at certain time intervals after the set up may arrange the movable monitoring device 101 in one of the preset image capturing positions to perform a tour of at least a part of the scene 102 and to capture an image, as described in relation to actions 207-211 above.

The movable monitoring device 101 comprises further an **image capturing unit 302** configured to capture an image of at least a part of a scene 102 for each image capturing position.

As mentioned above, the arranging unit 301 may arrange the movable monitoring device 101 in the second image capturing position for the same pan and/or tilt setting. Then, the image capturing unit 302 may be configured to capture a second image of the at least one marker 103 at the location 104 in at least a part of the scene 102, which second image may be of a better quality as compared to the previously captured image of the at least one marker 103 at the location 104.

When the movable monitoring device 101 has been arranged in one or more of the plurality of preset image capturing positions, e.g. for performing a tour of at least a part of the scene 102, the image capturing unit 302 is further configured to capture at least one image of the scene for a preset image capturing position comprised in the plurality of the preset image capturing positions.

**A recognizing unit 303** is further comprised in the movable monitoring device 101. The recognizing unit 303 is configured to recognize at least one marker 103 comprised in a captured image and arranged at a location 104 in the scene 102.

The recognizing unit 303 may be configured to recognize the at least one marker 103 by performing image processing and/or VCA and/or image recognition, such as OCR or barcode recognition, such as UPC recognition or EAN recognition.

As previously mentioned, the at least one marker 103 may comprise a barcode, a coloration, an empty shelf, a sign, a logotype, or a group comprising one or more barcode, coloration, empty shelf, sign, and/or logotype.

The recognizing unit 303 may further be configured to recognize the place of the at least one marker 103 within the captured image. That is, the recognizing unit 303 may be configured to recognize if the at least one marker 101 is arranged at or close to the edges of the captured image, or if the at least one marker 101 is arranged in the center of the captured image or if the at least one marker 101 is arranged somewhere between the edges and the center of the captured image.

When the image capturing unit 302 has taken the second image, as described above, the recognizing unit 303 may further be configured to recognize the at least one marker 103 comprised in the captured second image and arranged at the location 104 in the at least a part of the scene 102.

In some embodiments, when the image capturing unit 302, for a preset image capturing position, has captured at least one image of at least a part of the scene 102, the recognizing unit 303 is further configured to recognize the marker 103 for the preset image capturing position in the at least one image.

Further, the movable monitoring device 101 comprises a storing unit 304 configured to store, for the captured image comprising the at least one marker 103, the image capturing position as the preset image capturing position for the location 104. The location 104 may comprise the at least one marker 103.

However, as previously mentioned, the location 104 does not need to comprise the marker 103. It may be sufficient that the marker 103 is arranged at the location 104 and represents the location 104.

In some embodiments, the location 104 corresponds to the at least one marker 103.

Further, the image capturing position may be stored as the preset image capturing position for the at least one marker 103.

The storing unit 304 may be configured to store the image capturing position as the preset image capturing position in a storage, e.g. in the storage device 110, the database 111 and/or in a memory 308 (will be described below) of the movable monitoring device 101. The storing unit 304 may further be configured to store the label together with the preset image capturing position in the storage.

The storing unit 304 may be configured to store a plurality of preset image capturing positions in the storage. For example, the storing unit 304 may be configured to store one preset image capturing position for each captured image comprising the marker 103. Thus, a plurality of preset image capturing positions may be stored for one marker 103.

In some embodiments, the storing unit 304 is configured to store only one preset image capturing position for each marker 103 in the storage. For example, the preset image capturing position may only be stored for the marker 103 when the marker 103 is placed within a central part of the captured image. By a central part is meant in the center or almost in the center of the captured image.

In some embodiments, when the recognizing unit 303 has recognized the at least one marker 103 comprised in the captured second image, the storing unit 304 is configured to, for the captured second image comprising the at least one marker 103, store the second image capturing position as the preset image capturing position for the at least one marker 103, whereby the second image capturing position replaces a possible previously stored first image capturing position as the preset image capturing position.

The storing unit 304 may further be configured to store images and/or videos to the storage, e.g. to the storage device 110.

In some embodiments, the movable monitoring device 101 comprises an **image processing unit 305** configured to perform image processing on the captured image. When the at least one marker 103 is arranged to identify an item 105, the image processing unit 305 configured to process the marker 103 to identify the item 105. The image processing unit 305 may be configured to process the marker 103 by performing character recognition and/or image recognition and/or VCA. Further, in case the at least one marker 103 is a barcode and the barcode is a UPC barcode or an EAN barcode, the image processing unit 305 is configured to look up the identity of the item 105 in e.g. a lockup table.

In some embodiments, when the movable monitoring device 101 has captured an image for a preset image capturing position, the image processing unit 305 is configured to send the captured image to the server 106 and/or to the user equipment 108,109 for image analysis. The image processing unit 305 may send the captured image via e-mail, FTP, and/or other message types as previously described.

In some embodiments, when the movable monitoring device 101 has captured an image for a preset image capturing position, the image processing unit 305 is configured to perform image analysis of the captured at least one image. After the recognizing unit 303 has recognized the marker 103 as described above, the image processing unit 305 is configured to perform image analysis of the captured at least one image in order to be able to detect a possible event in the at least one image, as will be described below. The image processing unit 305 may be configured to perform image analysis by identifying an area of uniform color in the captured image as an empty shelf, an open door or a closed door.

In some embodiments, the image processing unit 305 is configured to send the captured image to the server 106 and/or to the user equipment 108,109 for image analysis. The movable monitoring device 101 may send the captured image via e-mail, FTP, and/or other message types as previously described.

The image processing unit 305 may further be configured to detect an event associated with the marker 103.

The event may for example be an empty shelf. Thus, the image processing unit 305 may be configured to detect an empty shelf, whereby a provider of the item to be located at the empty shelf may be notified that a refill is needed.

Further, the event may be that a car is present or absent at a parking lot.

Furthermore, the event may be that a door is open or closed.

As another example, the event may be that there is an obstruction under a marker identifying an emergency exit as previously described.

Further, the event may be that a captured image should be sent via an electronic media, such as e-mail, FTP, Really Simple Syndication or Rich Site Summary (RSS), fax, etc., to be viewed by a user or by a more advanced external image system.

The image processing unit 305 may further be configured to generate an action, such as an e-mail or an alarm, based on the detected event, and to send the action to the server 106 and/or a user equipment 108,109 over the network 107.

The movable monitoring device 101 may further comprise a labeling unit 306 configured to label the preset image capturing position.

When the at least one marker 103 is arranged to identify an item 105, the labeling unit 306 is configured to label the preset image capturing position with the identity of the item 105.

In some embodiments, the labeling unit 306 is configured to label the preset image capturing position using one or more characters related to the at least one marker 103. The one or more characters may be one or more letters written on the at least one marker or one or more figures drawn on the at least one marker 103.

It should be understood that one or more of the units described above may be integrated into one or more single units configured to perform one or more of the described features. For example, the recognizing unit 303 and the image processing unit 305 may be a single unit configured to perform one or more of the features described in relation to the description of each of them.

Further, embodiments herein for configuring at least one preset image capturing position of the movable monitoring device 101 may be implemented through one or more processors, e.g. microprocessor, such as **a processing circuit 307** comprised in the movable monitoring device 101 depicted in Fig. 3, together with computer program code for performing the functions and/or method actions of embodiments herein.

The movable monitoring device 101 may further comprise **a memory 308**. The memory 308 may comprise one or more memory units and may be used to store for example data and/or information such as data and/or information relating to the one or more movable monitoring devices 101, users interacting with the one or more movable monitoring devices 101, and/or to the one or more markers 103. As previously mentioned, the memory 308 may further be configured to store the plurality of preset image capturing positions together with the associated labels and time points and/or time intervals. The memory 308 may further comprise the history of detected events and generated actions together with the time points of the respective detected event and generated action.

The memory 308 may be a volatile memory, i.e. a memory requiring power to maintain the stored information or a non-volatile memory, i.e. a memory not requiring power to maintain the stored information. The volatile memory may comprise a Random Access Memory (RAM). The non-volatile memory may comprise a read-only memory, a flash memory, and/or a ferroelectric RAM.

As previously mentioned, the monitoring system 100 may comprise several movable monitoring devices 101. Presets from the movable monitoring devices 101 may be are stored in the same storage 110 and/or database 111. The user may then search for labels corresponding to markers 103 found by one or more of the monitoring devices 101 comprised in the monitoring system 100. An example may be a major airport where a large number of movable monitoring devices 101 are installed. The markers 103 in this example may be car registration plates. The monitoring system 100 may be able to search in the preset database 111, containing presets for all movable monitoring devices 101, for a car with a registration number ABC123. The movable monitoring devices 101 arranged closest to the registration plate ABC123 may be able to give a live video feed from that location.

Although the description above contains many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a device or method to address each and every problem sought to be solved by the described technology for it to be encompassed hereby.

When using the word "comprise" or "comprising" it shall be interpreted as non-limiting, in the meaning of "consist at least of".

When using the word action/actions it shall be interpreted broadly and not to imply that the actions have to be carried out in the order mentioned. Instead, the actions may be carried out in any suitable order other than the order mentioned. Further, some action/actions may be optional.

The embodiments herein are not limited to the above described examples. Various alternatives, modifications and equivalents may be used. Therefore, the above examples should not be taken as limiting the scope of the invention, which is defined by the appending claims.

## Claims

1. A method in a movable monitoring device (101) for configuring at least one preset image capturing position of the movable monitoring device (101), wherein the method comprises:
- *arranging (201)* the movable monitoring device (101) in a plurality of image capturing positions, wherein each image capturing position is defined by at least one setting of the movable monitoring device (101);
- for each image capturing position, *capturing (202)* an image of at least a part of a scene (102);
- *recognizing (203)* at least one marker (103) comprised in a captured image and arranged at a location (104) in the scene (102); and
- for the captured image comprising the at least one marker (103), *storing (204)* the image capturing position as the preset image capturing position for the location (104).

2. The method of claim 1, wherein the at least one setting of the movable monitoring device (101) is a pan setting, a tilt setting, a zoom setting, a focus setting, and/or an exposure time setting.

3. The method of claim 1 or 2, wherein the plurality of image capturing positions is a plurality of consecutive image capturing positions, which plurality of consecutive image capturing positions start at a start image capturing position corresponding to a start setting of the at least one setting of the movable monitoring device (101) and end at an end image capturing position corresponding to an end setting of the at least one setting of the movable monitoring device (101).

4. The method of any one of claim 1-3, wherein the plurality of image capturing positions comprises a set of predefined image capturing positions, and wherein the set of predefined image capturing positions corresponds to a predefined region of the scene (102).

5. The method of any one of claim 1-4, wherein the at least one marker (103) is arranged to identify an item (105), wherein the location (104) is a location for the item (105), and wherein the method further comprises:
- *processing (205)* the marker (103) to identify the item (105); and
- *labeling (206)* the preset image capturing position with the identity of the item (105).

6. The method of any one of claim 1-5, wherein the method further comprises:
- *arranging (207* the monitoring device (101) in a plurality of the preset image capturing positions;
- *capturing (208),* for a preset image capturing position comprised in the plurality of preset image capturing positions, at least one image of at least a part of the scene (102);
- *recognizing (209)* the marker (103) for the preset image capturing position in the at least one image;
- *performing (210)* image analysis of the captured at least one image; and
- *detecting (211)* an event associated with the marker (103).

7. A movable monitoring device (101) for configuring at least one preset image capturing position of the movable monitoring device (101), **characterized by**:
- an arranging unit (301) configured to arrange the movable monitoring device (101) in a plurality of image capturing positions, wherein each image capturing position is defined by at least one setting of the movable monitoring device (101);
- an image capturing unit (302) configured to capture an image of at least a part of a scene (102) for each image capturing position;
- a recognizing unit (303) configured to recognize at least one marker (103) comprised in a captured image and arranged at a location (104) in the scene (102); and
- a storing unit (304) configured to store, for the captured image comprising the at least one marker (103), the image capturing position as the preset image capturing position for the location (104).

8. The movable monitoring device (101) of claim 7, **characterized in that** the at least one setting of the movable monitoring device (101) is a pan setting, a tilt setting, a zoom setting, a focus setting, and/or an exposure time setting

9. The movable monitoring device (101) of claim 7 or 8, **characterized in that** the plurality of image capturing positions is a plurality of consecutive image capturing positions, which plurality of consecutive image capturing positions start at a start image capturing position corresponding to a start setting of the at least one setting of the movable monitoring device (101) and end at an end image capturing position corresponding to an end setting of the at least one setting of the movable monitoring device (101).

10. The movable monitoring device (101) of any one of claim 7-9, **characterized in** the plurality of image capturing positions comprises a set of predefined image capturing positions, and wherein the set of predefined image capturing positions corresponds to a predefined region of the scene (102).

11. The movable monitoring device (101) of any one of claim 7-10, **characterized in that** the at least one marker (103) is arranged to identify an item (105) and **in that** the location (104) is a location for the item (105), and the movable monitoring device (101) is further **characterized by:**
- an image processing unit (305) configured to process the marker (103) to identify the item (105); and
- a labeling unit (306) configured to label the preset image capturing position with the identity of the item (105).

12. The movable monitoring device (101) of any one of claim 7-11, **characterized in that**:
- the arranging unit (301) further is configured to arrange the monitoring device (101) in a plurality of the preset image capturing positions;
- the image capturing unit (302) is further configured to capture at least one image of the scene for a preset image capturing position comprised in the plurality of the preset image capturing positions;
- the recognizing unit (303) is further configured to recognize the marker (103) for the preset image capturing position in the at least one image, and wherein the movable monitoring device (101) is further **characterized by:**
- an image processing unit (305) configured to perform image analysis of the captured at least one image to detect an event associated with the marker (103).

13. A monitoring system (100), **characterized by:**
- at least one movable monitoring device (101) according to any one of claim 7-12; and
- a server (106) connected to the at least one movable monitoring device (101) over a network (107), and wherein the server (106) is configured to control the at least one movable monitoring device (101).

14. The monitoring system (100) of claim 13, **characterized in that** the server (106) is further configured to control interaction between the at least one movable monitoring device (101) and one or more user equipment (108,109) connected to the network (107).

15. A computer program product with program code portions for carrying out one or more of the methods of claim 1-6 and/or or realizing one or more of the features defined in one or more of claim 7-12, when executed in a processing unit.
